(19) **Europäisches Patentamt**
**European Patent Office**
**Office européen des brevets**

(11) **EP 2 225 846 B1**

(12) **EUROPEAN PATENT SPECIFICATION**

(45) Date of publication and mention
of the grant of the patent:
**24.07.2013 Bulletin 2013/30**

(51) Int Cl.:
*H04L 9/08* *(2006.01)*      *H04L 9/30* *(2006.01)*
*H04L 9/32* *(2006.01)*      *H04N 7/167* *(2011.01)*

(21) Application number: **08858049.3**

(86) International application number:
**PCT/EP2008/066827**

(22) Date of filing: **04.12.2008**

(87) International publication number:
**WO 2009/071639 (11.06.2009 Gazette 2009/24)**

(54) **Method to generate a private key in a Boneh-Franklin scheme**

Verfahren zur Erzeugung eines Privatschlüssels in einem Boneh-Franklin-Schema

Procédé pour générer une clé privée dans une méthode Boneh-Franklin

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.12.2007 EP 07122416**

(43) Date of publication of application:
**08.09.2010 Bulletin 2010/36**

(73) Proprietor: **Nagravision S.A.**
**1033 Cheseaux-sur-Lausanne (CH)**

(72) Inventors:
• **KARLOV, Alexandre**
**CH-1217 Meyrin (CH)**
• **JUNOD, Pascal**
**CH-1302 Vufflens-la-Ville (CH)**

(74) Representative: **Leman Consulting S.A.**
**Chemin de Précossy 31**
**1260 Nyon (CH)**

(56) References cited:
• **KUROSAWA K; YOSHIDA T: "Linear code implies public-key traitor tracing" PUBLIC KEY CRYPTOGRAPHY. 4TH INTERNATIONAL WORKSHOP ON PRACTICE AND THEORY IN PUBLIC KEY CRYPTOSYSTEMS, PKC 2002. PROCEEDINGS. SPRINGER-VERLAG, LECTURE NOTES IN COMPUTER SCIENCE, vol. 2274, 14 February 2002 (2002-02-14), pages 172-187, XP002475358 Paris, France ISBN: 3-540-43168-3**
• **SILJA MÄKI: "On Long-Lived Public-Key Traitor Tracing. First Steps"[Online] 2001, XP002475359 Retrieved from the Internet: URL: citeseer.ist.psu.edu/maki01longlived.h tml> [retrieved on 2008-04-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Field of the Invention

The aim of the present invention is to propose an alternative scheme to the classical Boneh-Franklin scheme in order to simplify the generation and the use of the asymmetric keys.

### Prior art

Consider the following scenario: a center would like to broadcast some data to $\ell$ receivers, where only authorized users (typically, those who have paid a fee) can have access to the data. A possible solution, widely deployed in commercial Pay-TV systems or in secured media distribution systems, for instance, consists in encrypting the data using a symmetric key and to securely transmit to each authorized receiver this key which will be stored in a tamper-proof piece of hardware, like a smartcard.

Unfortunately, tamper-resistant hardware is very difficult and/or costly to design, since it is vulnerable to a wide variety of attacks. Therefore, a malicious user (hereafter called a traitor) can try to retrieve the decryption key from his receiver and distribute it (sell or give away) to unauthorized users (*the pirates*). Depending on the nature of the encryption schemes in use, we can even imagine situations where a dishonest user will try to mix several legitimate keys in order to build a new one and embed it in a pirate receiver device.

The problem of identifying which receivers were compromised and/or which secret keys were leaked is called *traitor tracing.* Usually, two modes of traitor tracing are considered: in the *black-box* mode, the tracing algorithm sends crafty ciphertexts to the rogue receiver and aims at determining which keys it uses while observing its behavior; in the *non-black-box* model, we assume that the keys (or their combination) can be extracted from the pirate receiver and are known to the tracing algorithm.

Fiat and Naor [1] introduced the concept of broadcast encryption. In their model, there exists a set of $\ell$ authorized users and the broadcasting center can dynamically specify a privileged subset of authorized users that can decrypt selected ciphertexts (like high-value content, for instance). Later on, Chor, Fiat, and Naor [2] introduced the concept of traitor-tracing to thwart the problem of decryption keys piracy in broadcast encryption schemes; their scheme is *k-collusion resistant* (or *k-resilient*) in the sense that at least one traitor is identified with very high probability if there are at most k of them. Later on, Naor, Naor and Lotspiech [3, 4] presented more efficient broadcast encryption schemes with tracing capabilities; it was however shown by Kiayias and Pehlivanoglu [5] that the iterative nature of the tracing procedure allows a pirate to leverage significantly the compromise of a few keys.

Boneh and Franklin [6] proposed a new public-key traitor-tracing scheme based on error-correcting codes, more precisely on Reed-Solomon codes. The Boneh-Franklin non-black-box traitor tracing scheme is k-collusion resistant and deterministic in the sense that all of the traitors are identified with probability 1 as long as at most k of them collude to derive new pirate keys.

In the publication "Linear code implies public-key traitor tracing" Public Key Cryptography -- PKC 2002, 4th International Workshop on Practice and theory in Public Key Cryptography (14 February 2002), the authors Kurosawa and Yoshida have shown the following very general result: they show that it is possible to replace the linear code described in the publication of Boneh and Franklin, which is very precisely defined, by any linear code. However, they don't show practical instances of their claim by exhibiting, for instance, a different linear code from Boneh and Franklin having special or additional properties.

In summary, their result is more "existential" than "practical".

In the present application, we describe very precise instances of linear codes that have, in the context of the Boneh-Franklin traitor-tracing scheme, either exceptional performances, or very specific security properties (with respect to an attack that has never been disclosed before our disclosure).

### Problem to be solved

The aim of the present application is an improved key generation and encryption mechanism for Boneh-Franklin and related schemes.

An immediate benefit of the present application is the possibility to use Reed-Solomon codes that are especially optimized to allow faster decryption and key generation. In practice, for large systems and coalitions of medium size, one obtains a decryption speed improvement by almost an order of magnitude.

The present application also addresses the beyond-threshold security of the Boneh-Franklin scheme: if an adversary is able to recover 2k or more secret keys, where k is the maximal collusion size defined prior to the system deployment, then he is able to compute any other secret key (even if they were not compromised) and thus, the security of the system completely collapses. This is mainly due to the fact that the linear tracing code is public. In the present application we propose a way to protect against this issue.

**Boneh-Franklin Scheme**

Original Boneh-Franklin

We now describe the original Boneh-Franklin algorithm in details as advertised and published in [6]. This description will be the basis for the description of the invention for the fast and secure traceable keys and encryption/ decryption mechanisms.

Group Parameters Generation

We need a group Gq (i.e., a set of elements equipped with a mathematical operation) of prime order q in which the Decision Diffie-Hellman problem is hard. Three main choices are thinkable, but other exist:

Scenario 1. We can work in a subgroup of order q of the group Z/pZ, where p and q are large prime numbers and where qlp - 1. Typically, q is a 160-bit prime number and p is a 1024-bit prime number. Group elements are 1024-bit numbers requiring 1024 bits of storage/bandwidth; implementing Boneh-Franklin scheme on a prime- order subgroup of *Z/pZ* requires to be able to perform modular additions, modular subtractions, modular multiplications and modular inversions both on 160-bit and on 1024-bit numbers.

Scenario 2. We can work over a group of points of an elliptic curve [3] over a finite field with characteristic 2 having in the order of $2^{160}$ elements. Group elements require typically 320 bits, but point compression techniques allow decreasing this number down to 160 bits of storage/bandwidth. Implementing Boneh-Franklin scheme on such a group requires that the receiver be able to perform additions, subtractions, multiplications and inversions on 160-bit field elements.

Scenario 3. We can work over a group of points of an elliptic curve over a finite field with a large prime characteristic and having in the order of $2^{160}$ elements. Group elements require typically 320 bits, but point compression techniques allow decreasing this number down to 160 bits of storage/bandwidth. Implementing Boneh-Franklin scheme on such a group requires performing modular additions, modular subtractions, modular multiplications and modular inversions on 160-bit numbers.

Key Generation

We now describe the traceable key public component $\gamma^{(i)}$ generation process as done in [6]. For ease of understanding, we assume from now on that we work in a multiplicative group as described in scenario 1. Basically, the approach of Boneh and Franklin is based on the use of Reed-Solomon codes.

Given the following matrix

$$A = \begin{pmatrix} 1 & 1 & 1 & \dots & 1 \\ 1 & 2 & 3 & \dots & \ell \\ 1^2 & 2^2 & 3^2 & \dots & \ell^3 \\ \vdots & \vdots & \vdots & & \vdots \\ 1^{\ell-2k-1} & 2^{\ell-2k-1} & 3^{\ell-2k-1} & \dots & \ell^{\ell-2k-1} \end{pmatrix}^{15} \pmod{q} \qquad (20)$$

and considering a basis $b_1, \dots, b_{2k}$ of the nullspace of A, a new matrix is built

$$B = \begin{pmatrix} | & | & | & & | \\ b_1 & b_2 & b_3 & \dots & b_{2k} \\ | & | & | & & | \end{pmatrix} \tag{21}$$

consider $\Gamma$ as being the rows of $B$. Thus, $\Gamma$ contains $\ell$ codewords each of length $2k$. By observing that any vector in the span of the rows of A corresponds to a polynomial of degree at most $\ell$ - $2k$ - 1 evaluated at the points 1,... , $\ell$ one can construct the rows of $B$ using Lagrange interpolation.

Let $k$ denote the maximal allowed coalition size (i.e., the maximum number of keys that could potentially be mixed by a pirate while keeping the tracing properties). Let $g$ denote a generator of the group $G_q$ of prime order $q$ in which we implement the Boneh-Franklin scheme. Let $\ell$ denote the maximum number of receivers in the Boneh-Franklin system. Let $1 \leq i \leq \ell$ denote the identity of the $i$-th receiver. The following values are computed:

1. The $i$-th Boneh-Franklin traceable key public component is computed as being the following 2k-valued vector over Z/qZ:

$$\gamma^{(i)} = (u_i \bmod q,\ iu_i \bmod q,\ i^2 u_i \bmod q, \ldots, i^{2k-1} u_i \bmod q) \tag{1}$$

where

$$u_1 = \left( \prod_{j=1}^{l-1} -j \right)^{-1} \bmod q \tag{2}$$

and

$$u_{i+1} = \frac{i-1}{u_i(i-\ell)} \bmod q \quad \text{for } 2 \leq i \leq \ell - 1. \tag{3}$$

2. The public key is computed by generating $2k$ secret values $r_j$:

$$r_j \in_R Z/qZ \text{ for } 1 \leq j \leq 2k \tag{4}$$

and computing

$$h_j = g^{r_j} \text{ for } 1 \leq j \leq 2k. \tag{5}$$

Then $2k$ secret values $\alpha_j$ are generated:

$$\alpha_j \in_R Z/qZ \text{ for } 1 \leq j \leq 2k \tag{6}$$

and finally the value $y$ is computed as

$$y = \prod_{j=1}^{2k} h_j^{\alpha_j} \tag{7}$$

The public key is then defined as being the $(2k + 1)$-valued vector

$$(y, h_1, \ldots, h_{2k}) \tag{8}$$

3. The $i$-th private key secret component $\theta_i$ put in the $i$-th receiver, is derived from the $i$-th traceable key public component
$\gamma^{(i)} = \gamma_1^{(i)}, \ldots, \gamma_{2k}^{(i)}$ as

$$\theta_i = \frac{\sum r_j \alpha_j}{\sum r_j \gamma_j^{(i)}} \bmod q \tag{9}$$

Encryption

To encrypt a message $m \in Gq$, we first generate a random value $a \in_R Z/qZ$ and the ciphertext is defined as being the $(2k + 1)$-valued vector

$$(m \cdot y^a, h_1^a, \ldots, h_{2k}^a) \tag{10}$$

Decryption

Given a ciphertext $c = (s, p_1, \ldots, p_{2k})$, it is easy to see that one can recover $m$ by computing using i-th private key secret component $\theta_i$

$$m = \frac{s}{\left( \prod_{j=1}^{2k} p_j^{\gamma_j^{(i)}} \right)^{\theta_i}} \tag{11}$$

where $\gamma_j^{(i)}$ are the public components of the traceable private key which are used to derive $\theta_i$.

**Brief description of the invention**

In order to simplify the generation and the use of the asymmetric keys, in particular private keys in a public key encryption scheme with traceable private keys formed by a public component and a secret component, we propose a method to generate an $i$-th private key in a public key encryption scheme with traceable private keys formed by a public component $\gamma^{(i)}$ and a secret component $\theta_i$, according to a maximal coalition factor $k$, with all arithmetic operations performed within the multiplicative group $Z/qZ$ where $q$ is a prime number,
said public component being defined as :

$$\gamma^{(i)} = (1, b \bmod q, b^2 \bmod q, \ldots, b^{2k-1} \bmod q)$$

and said secret component being defined as :

$$\theta_i = \frac{\sum r_j \alpha_j}{\sum r_j \gamma_j^{(i)}} \bmod q$$

where $r_j$ and $\alpha_j$ are uniformly distributed random values in the group $Z/qZ$, $1 \le j \le 2k$ and where the value b may be either public and easily computable or secret and statistically decorrelated.

Furthermore, we propose two possible variants to encrypt any type of message faster than the original Boneh-Franklin scheme with the same tracing and security properties.

**Detailed Description of the Invention**

Traceable Keys for Fast Decryption

We now present a traceable private key public component generation process which allows deriving public components which offer a significantly improved decryption speed.

Previously, we noted that the components $\gamma^{(i)}$ can be computed using the recursive formula Eq. (3); this operation is typically feasible in the broadcasting center, but not in a receiver. We can furthermore note that, working in a usual security configuration of $2^{80}$ operations, the elements of a public component $\gamma^{(i)}$ have all a length of 160 bits.

This new method works as follows: in the key generation process described previously, the step 1 is replaced by

1' We compute the $i$-th fast Boneh-Franklin traceable private key public component as being the following $2k$-valued vector over $Z/qZ$:

$$\gamma^{(i)} = (1, i \bmod q, i^2 \bmod q, \ldots, i^{2k-1} \bmod q). \qquad (12)$$

The method presented below results in rather small exponent sizes which can drastically speed up the ciphertext decryption in the receiver: re-writing (11) as

$$m = \frac{s}{\left( \prod p_j^{i^{j-1}} \right)^{\theta_i}} = \frac{s}{\left( \left( \left( p_{2k}^i p_{2k-1} \right)^i p_2 \right)^i p_1 \right)^{\theta_i}} \qquad (13)$$

we can transform, for instance for $\ell = 2^{20}$, $2k + 1$ modular exponentiations with 160-bit exponents by $2k$ modular exponentiations with 20-bit exponents and one 160-bit exponentiation. This is more than a 7-times speedup.

According a particular embodiment of the invention, $q$ is higher than $2^{127}$ in order to avoid generic attacks against the discrete logarithm problem.

A further advantage of this method is that a receiver can compute the public component of the decryption key without the need to evaluate the recursive formula of Eq. (3).

Traceable Keys for Added Security

In practical scenarios, there might be a situation where an attacker might have $2k$ secret components $\theta_i$, at his disposal. This part of the invention describes specifically how to the system can be protected in such a case. We start by describing an attack that might occur in practice and allow the attacker to derive every private key in the system.

Let us suppose than an adversary has managed to get $2k$ private elements $\theta_{i,}$ for $1 \le s \le 2k$. The vectors in $\Gamma = \{\gamma^{(1)}, \gamma^{(2)}, ..., \gamma^{(\ell)}\}$ are assumed to be public. Then, we can rewrite Eq. (9) over $Z/qZ$ as

$$\theta_{(i_s)}^{-1} = \frac{\sum_{j=1}^{2k} r_j \gamma_j^{(i_s)}}{\sum_{j=1}^{2k} r_j \alpha_j} = \sum_{j=1}^{2k} \omega_j \gamma_j^{(i_s)} \tag{22}$$

with $\omega_j = r_j / \sum r_j \alpha_j$; note that the $\omega_j$ are unknown coefficients to an adversary. However, with $2k$ private elements, we have a system of $2k$ linear equations with $2k$ variables with a single solution revealing the values of $\omega_j$ to the adversary using a simple Gaussian reduction. From those coefficients, the adversary can compute any other private key $\theta_{i_v}$ in the system

$$\theta_{i_v} = \left( \sum_{j=1}^{2k} \omega_j \gamma_j^{(i_v)} \right)^{-1} \tag{23}$$

Not only the adversary will be able to create many untraceable combinations of keys, but he will be also able to distribute newly derived keys so that *innocent* users (whose keys were a priori never compromised) will be accused of treachery.

We now present a traceable key generation process which allows deriving traceable keys resistant to pirates able to gather $2k$ keys or more. This new method works as follows:

1" We compute the *i*-th fast Boneh-Franklin public component of the traceable private key as being the following $2k$-valued vector over $Z/qZ$:

$$\gamma^{(i)} = (1, \zeta \bmod q, \zeta^2 \bmod q, \dots, \zeta^{2k-1} \bmod q). \tag{14}$$

where $\zeta \in_R Z/qZ$ is drawn independently and uniformly at random for each $\gamma^{(i)}$.

We note that the receivers have to store the entire representation

$$d^{(i)} = (\theta_i \gamma_1^{(i)}, \dots, \theta_{2k} \gamma_{2k}^{(i)}) \tag{15}$$

in tamper-proof memory and hence the abovementioned public component becomes secret.

A possible variant would consist in deriving $\zeta$ from *i* by processing i and/or additional information with a cryptographically secure pseudo-random function (or permutation) parametered by a secret key.

Hybrid Encryption

To encrypt a message $m \in Gq$, the standard Boneh-Franklin encryption procedure requires to generate a random value $a \in_R Z/qZ$ and the ciphertext is defined as being the $(2k + 1)$-valued vector

$$(m \cdot y^a, h_1^a, \dots, h_{2k}^a) \tag{16}$$

In most practical situations, the message $m$ consists in a symmetric session key $k$, which is then used to encrypt some content, since $m$ is of limited length (no more than 20 bytes, usually). Furthermore, one possibly needs a hash function mapping a group element to a symmetric key.

We propose to bypass these intermediate steps and to use one of the two following possible variants to encrypt any type of message faster than the standard Boneh-Franklin scheme, but keeping the same tracing and security properties.

1. To encrypt a message $m \in \{0, 1\}^*$ (i.e., a bitstring of arbitrary length), we first generate a random value $a \in_R Z/qZ$ and the ciphertext is defined as being the $(2k + 1)$-valued vector

$$(m \oplus \text{PRF}(n, y^a), h_1{}^a, \ldots, h_{2k}{}^a) \qquad (17)$$

where PRF(., .) denotes a cryptographically secure pseudo-random function. For instance, it can be HMAC-SHA1, HMAC-SHA256 or a block cipher evaluated on a counter and where $y^a$ is considered as being the symmetric key and $n$ is a nonce value (e.g., a counter incremented sufficiently many times to generate enough key stream). Here, the XOR operation $\oplus$ could be replaced by any group law.

2. To encrypt a message $m \in \{0, 1\}^*$, we first generate a random value $a \in_R Z/qZ$ and the ciphertext is defined as being the $(2k + 1)$-valued vector

$$(\text{E}(m, y^a), h_1{}^a, \ldots, h_{2k}{}^a) \qquad (18)$$

where E(., .) is a block cipher or any symmetric encryption scheme based on a block cipher, and where $y^a$ is considered as being the key. A possible variant would consist in mapping the $y^a$ value to a key using a hash function. Another possible variant is an encryption scheme E(.,.) requiring additional information, like an initial vector.

**Field of application**

In Pay-TV systems, the use of traceable asymmetric keys is an advantage in terms of fighting against piracy. The Pay-TV receiver (or the security module thereof) is loaded with a private key i.e., the public component $\gamma^{(i)}$ and the secret component $\theta_i$. Each Pay-TV receiver, such as a set top-box, multimedia device or wireless portable device (DVB-H), comprises at least one private key. The secret component is preferably stored in a secure container such as a SIM card, smartcard of any type of tamper-proof memory.

In a practical example, a video/audio data packet PSpacket will be encrypted in the following way, assuming we are working with a multiplicative group and HMAC-SHA256 as the function PRF (see formula (17)):

- generate uniformly distributed random value a

- compute $h_1{}^a$, $h_2{}^a$, ... $h_{2k}{}^a$ using 2k last elements of the public key (see formula (8)),

- compute $y^a$ using the first element of the public key,

- divide the PSpacket into chunk packets of 256 bits possibly remaining a residual packet of less than 256 bits,

- initialize an index to an arbitrary constant (usually 0),

- for each chunk, computing the HMAC-SHA256 of the index with $y^a$ as key, the index being updated for each chunk, and applying an XOR function (or any group operation) with the respective chunk

- in case that a residual chunk exists, adjusting the HMAC-SHA256 value by extracting the number of bit corresponding to the number of bits of the residual chunk before applying the XOR function.

- transmitting to the receiver, the result values after the XOR function and the $h_1{}^a$, $h_2{}^a$, ..., $h_{2k}{}^a$

In the receiver side, the received values $h_1{}^a$, $h_2{}^a$, ..., $h_{2k}{}^a$ are considered as 2k values i.e. $P_1$, $P_2$, ... $P_{2k}$.
In order to extract the audio/video data PSpacket, the following steps will be executed :

- computing $y^a = \left( \prod_{j=1}^{2k} p_j^{\gamma_j^{(i)}} \right)^{\theta_i}$ using the $\gamma^{(i)}$ public component of the private key, and $\theta_i$ is the secret component of the private key,

- executing the same HMAC-SHA256 operation as made on the sender side, by defining an index in the same way as defined during the encryption operation.

In this way, the broadcasting center can send a global, encrypted version of audio/video packet to all receivers; those receivers decrypt the packets using their own private key. A pirate willing to implement an unofficial (unlawful) receiver will necessarily have to embed a unique private key (or a mix of several private keys) in order to decrypt the packets. Having such a rogue receiver in hands, the Pay-TV operator can then recover the pirate private key(s) and possibly revoke it (them) using another mechanism and/or possibly take legal or any other action against the person having purchased the original (broken) receiver(s), provided such a link exists.

Instead of mixing the packets with HMAC result, the packets are encrypted with a standard symmetric encryption scheme using a key K, this key being used at the mixing step with the HMAC result.

According to another embodiment, the encrypted packet is obtained by encrypting the said packet with a symmetric encryption scheme using the $y^a$ value as a key (e.g. TDES in CBC mode). According to an alternative embodiment, a hashing function is first applied to the $y^a$ value before being used as a key. This is preferably the case when the size of the $y^a$ value is different than the size of the symmetric encryption scheme key.

Another possible field of application concerns the protection of software against piracy. We may assume that a software is sold together with a hardware dongle containing a different private key for every package. This dongle is able to decrypt a global ciphertext contained in the software and getting a piece of information which is necessary to the use of the software. If a pirate is willing to clone dongles and sell them, he must embed at least a private key. Getting such a pirate dongle in hands, the software seller can then recover the involved private key(s) and take legal or any other action against the person having purchased the original (broken) dongle(s), provided such a link exists.

**References**

[1] A. Fiat and M. Naor, "Broadcast encryption", CRYPTO'93, Lecture Notes in Computer Science 773, pp. 480-491, Springer-Verlag, 1994.

[2] B. Chor, A. Fiat and M. Naor, "Tracing Traitors", CRYPTO'94, Lecture Notes in Computer Science 839, pp. 257-270, Springer-Verlag, 1994.

[3] J. Lotspiech, D. Naor and M. Naor, *"Method for broadcast encryption and key revocation of stateless receivers"*, US patent 7'039'803.

[4] J. Lotspiech, D. Naor and M. Naor, "*Method for tracing traitor receivers in a broadcast encryption system*", US patent 7'010'125.

[5] A. Kiayias and S. Pehlivanoglu, "Pirate evolution: how to make the most of your traitor keys", CRYPTO'07, Lecture Notes in Computer Sciences 4622, pp. 448-465, Springer-Verlag, 2007.

[6] D. Boneh and M. Franklin, "An efficient public-key traitor tracing scheme", CRYPTO'99, Lecture Notes in Computer Sciences 1666, pp. 338-353, Springer-Verlag, 1999.

**Claims**

1. Method to generate an *i*-th private key in a public key encryption scheme with traceable private keys formed by a public component $\gamma^{(i)}$ and a secret component $\theta_i$, according to a maximal coalition factor *k*, with all arithmetic operations performed within a multiplicative group $Z/qZ$ where *q* is a prime number, said public component being defined as :

$$\gamma^{(i)} = (1, i \bmod q, i^2 \bmod q, \ldots, i^{2k-1} \bmod q)$$

and said secret component being defined as :

$$\theta_i = \frac{\sum r_j \alpha_j}{\sum r_j \gamma_j^{(i)}} \bmod q$$

where $r_j$ and $\alpha_j$ are random values in the group $Z/qZ$.

2. Method of claim 1, in which $q$ is higher than $2^{127}$.

3. Method of claim 1 or 2, in which the corresponding public key is defined as:

$(y, h_1, \ldots, h_{2k})$ where $h_j = g^{rj}$ for $1 \leq j \leq 2k$ and $g$ is a generator of a multiplicative group G of order $q$, and

$$y = \prod_{j=1}^{2k} h_j^{\alpha_j} \ .$$

4. Method of claim 1 or 2, in which the corresponding public key is defined as:

$$(y, h_1, \ldots, h_{2k})$$

where $h_j = r_j g$ for $1 \leq j \leq 2k$ and $g$ is a generator of an additive group $G$ of order $q$, and $y = \sum_{j=1}^{2k} \alpha_j h_j \ .$

5. Method of claims 1 to 4, in which $i$ is selected from 1 to $\ell$, $\ell$ being the number of generated different private keys corresponding to a given public key.

6. Method of claims 1 to 4, in which $i$ is selected from 1 to $\ell$, $\ell$ being the number of generated different private keys corresponding to a given public key this method further :

- generating a pseudorandom value $\zeta_i$ in the range of 1 to $q$-1, $q$ being at least larger than $\ell$, the public component being defined as :

$$\gamma^{(i)} = (1, \zeta_i, \zeta_i^2, \ldots, \zeta_i^{2k-1}).$$

- associating to the generated secret key data, the pseudorandom value $\zeta_i$.

7. Method of claim 6, in which the pseudorandom value $\zeta_i$ is calculated from $i$ such as for each $i$, only a unique $\zeta_i$ is obtained.

8. Method of claim 6, in which the pseudorandom value $\zeta_i$ is calculated from $i$ and an additional bit string, this calculation being made such as for each $i$, only a unique $\zeta_i$ is obtained.

9. Method to decrypt a ciphertext $c$ with the private key as generated according to the claims 1 to 8, to obtain a message $m$, the ciphertext being formatted as follows:

c = (s, $C_1$, ..., $C_{2k}$); s, $C_1$, ..., $c_{2k}$ are members of a multiplicative group $G$ of order $q$, the decryption being as follows :

$$m = \frac{s}{\left( \prod c_j^{\gamma_j^{(i)}} \right)^{\theta_i}}$$

where all the arithmetic calculations are performed in said multiplicative group $G$ of order $q$.

**10.** Method to decrypt a ciphertext $c$ with the private key as generated according to the claims 1 to 8, to obtain a message $m$, the ciphertext being formatted as follows:

c = (s, $c_1$, ..., $c_{2k}$); s, $c_1$, ..., $c_{2k}$ are members of an additive group $G$ of order $q$, the decryption being as follows :

$$m = s - \left( \sum c_j \gamma_j^{(i)} \right) \theta_i$$

where all the arithmetic calculations are performed in said additive group $G$ of order $q$.

**11.** Method to decrypt a ciphertext $c$ with the private key as generated according to the claims 1 to 8, to obtain a message $m$, the ciphertext being formatted as follows:

c = (s, $c_1$, ..., $c_{2k}$); $c_1$, ..., $c_{2k}$ are members of an additive group $G$ of order $q$, and s is an arbitrary bitstring, the decryption being as follows :

m= $D_K$ (s) and where $K$ is a computed as follows : $K = \left( \sum c_j \gamma_j^{(i)} \right) \theta_i$ where all arithmetic calculations are performed in said additive group $G$ of order $q$, and D is the decryption operation of a symmetric encryption scheme and $K$ is the key.

**12.** Method to decrypt a ciphertext $c$ with the private key as generated according to the claims 1 to 8, to obtain a payload $m$, the ciphertext being formatted as follows:

c = (s, $c_1$, ..., $c_{2k}$); $c_1$, ..., $c_{2k}$ are members of a multiplicative group $G$ of order $q$, and s comprising at least the encrypted payload $m$,
the decryption being as follows :

m= $D_K$ (s) and where $K$ is a computed as follows:

$$K = \left( \prod c_j^{\gamma_j^{(i)}} \right)^{\theta_i}$$ where all arithmetic calculations are performed in said multiplicative group $G$ of order $q$, and $D$ is the decryption operation of a symmetric encryption scheme and $K$ is the key.

**13.** Method of claims 11 or 12, wherein the encrypted payload s further contains additional information required by the symmetric decryption scheme $D$.

**14.** Method of claim 11 to 13, wherein said symmetric decryption scheme $D$ uses K' = H(K) where H is a hash function.

**Patentansprüche**

1. Verfahren, um in einem Verschlüsselungsverfahren für öffentliche Schlüssel mit rückverfolgbaren privaten Schlüsseln einen $i$-ten privaten Schlüssel zu erzeugen, bestehend aus einer öffentlichen Komponente $\gamma^{(i)}$ und einer geheimen Komponente $\theta_i$, gemäß einem maximalen Koalitionsfaktor $k$, wobei alle arithmetischen Operationen innerhalb einer multiplikativen Gruppe $Z/qZ$ ausgeführt werden, wobei $q$ eine Primzahl ist, wobei besagte öffentliche Komponente wie folgt definiert ist:

$$\gamma^{(i)} = (1,\ i\ \mathrm{mod}\ q,\ i^2\ \mathrm{mod}\ q,\ \ldots,\ i^{2k-1}\ \mathrm{mod}\ q)$$

und die geheime Komponente wie folgt definiert ist:

$$\theta_i = \frac{\sum r_j \alpha_j}{\sum r_j \gamma_j^{(i)}}\ \mathrm{mod}\ q$$

wobei $r_j$ und $\alpha_j$ Zufallswerte in der Gruppe $Z/qZ$ sind.

2. Verfahren nach Anspruch 1, wobei $q$ größer ist als $2^{127}$.

3. Verfahren nach Anspruch 1 oder 2, wobei der entsprechende öffentliche Schlüssel wie folgt definiert ist:

$(y, h_1, \ldots, h_{2k})$ wo $h_j = g^{r_j}$ für $1 \leq j \leq 2k$ und $g$ ein Generator einer multiplikativen Gruppe G $q$-ter Ordnung ist,

und $y = \prod_{j=1}^{2k} h_j^{\alpha_j}$ .

4. Verfahren nach Anspruch 1 oder 2, wobei der entsprechende öffentliche Schlüssel wie folgt definiert ist:

$$(y, h_1, \ldots, h_{2k})$$

wo $h_j = r_j g$ für $1 \leq j \leq 2k$ und g ein Generator einer additiven Gruppe $G$ $q$-ter Ordnung ist,

und $y = \sum_{j=1}^{2k} \alpha_j h_j$ .

5. Verfahren nach Anspruch 1 bis 4, wobei $i$ aus 1 bis $\ell$, $\ell$ gewählt ist, wobei die Zahl der verschiedenen erzeugten privaten Schlüssel einem gegebenen öffentlichen Schlüssel entspricht.

6. Verfahren nach Anspruch 1 bis 4, wobei $i$ aus 1 bis $\ell$, $\ell$ gewählt ist, wobei die Zahl der verschiedenen erzeugten privaten Schlüssel einem gegebenen öffentlichen Schlüssel entspricht, wobei dieses Verfahren des weiteren:

 - einen Pseudo-Zufallswerts $\zeta_i$ im Bereich von 1 bis $q$-1 erzeugt, wobei $q$ mindestens größer als $\ell$, ist, wobei die öffentliche Komponente wie folgt definiert ist:

$$\gamma^{(i)} = (1,\ \zeta_i,\ \zeta_i^2,\ \ldots,\ \zeta_i^{2k-1}).$$

 - den erzeugten Geheimnisschlüsseldaten den Pseudo-Zufallswert $\zeta_i$. zuweist.

7. Verfahren nach Anspruch 6, wobei der Pseudo-Zufallswert i aus i berechnet wird, so dass für jedes $i$ nur ein einziges $\zeta_i$ erhalten wird.

8. Verfahren nach Anspruch 6, wobei der Pseudo-Zufallswert $\zeta_i$ aus $i$ und einer zusätzlichen Bitreihe berechnet wird, wobei diese Berechnung so erfolgt, dass für jedes i ein einziges i erhalten wird.

9. Verfahren, um einen Chiffretext $c$ mit dem nach den Ansprüchen 1 bis 8 erzeugten privaten Schlüssel zu entschlüsseln, um eine Nachricht $m$ zu erhalten, wobei der Chiffretext folgendermaßen formatiert wird:

c = (s, $c_1$, ..., $c_{2k}$); S, $c_1$, ..., $c_{2k}$ sind Mitglieder einer multiplikativen Gruppe G q-ter Ordnung, wobei die Entschlüsselung folgendermaßen erfolgt:

$$m = \frac{s}{\left( \prod c_j^{\gamma_j^{(i)}} \right)^{\theta_i}}$$

wobei alle arithmetischen Berechnungen in besagter multiplikativer Gruppe G q-ter Ordnung ausgeführt werden.

10. Verfahren, um einen Chiffretext c mit dem nach den Ansprüchen 1 bis 8 erzeugten privaten Schlüssel zu entschlüsseln, um eine Nachricht m zu erhalten, wobei der Chiffretext folgendermaßen formatiert wird:

C = (s, $c_1$, ..., $c_{2k}$); s, $c_1$, ..., $c_{2k}$ sind Mitglieder einer additiven Gruppe $G$ $q$-ter Ordnung,
wobei die Entschlüsselung folgendermaßen erfolgt:

$$m = s - \left( \sum c_j \gamma_j^{(i)} \right) \theta_i$$

wobei alle arithmetischen Berechnungen in besagter additiver Gruppe $G$ $q$-ter Ordnung ausgeführt werden.

11. Verfahren, um einen Chiffretext c mit dem nach den Ansprüchen 1 bis 8 erzeugten privaten Schlüssel zu entschlüsseln, um eine Nachricht $m$ zu erhalten, wobei der Chiffretext folgendermaßen formatiert wird:

$c$ = (s, $c_1$, ..., $c_{2k}$); $c_1$, ..., $c_{2k}$ sind Mitglieder einer additiven Gruppe $G$ $q$-ter Ordnung, und s ist ein beliebiger Bitstring,
wobei die Entschlüsselung folgendermaßen erfolgt:

m= $D_K$ (s), wobei $K$ folgendermaßen berechnet wird:

$$K = \left( \sum c_j \gamma_j^{(i)} \right) \theta_i$$

wobei alle arithmetischen Berechnungen in besagter additiver Gruppe $G$ $q$-ter Ordnung ausgeführt werden und $D$ die Entschlüsselungsoperation eines symmetrischen Verschlüsselungsverfahrens ist und K der Schlüssel.

12. Verfahren, um einen Chiffretext c mit dem nach den Ansprüchen 1 bis 8 erzeugten privaten Schlüssel zu entschlüsseln, um Nutzdaten m zu erhalten, wobei der Chiffretext folgendermaßen formatiert wird:

$c$ = (s, $c_1$, ..., $c_{2k}$); $c_1$, ..., $c_{2k}$ sind Mitglieder einer multiplikativen Gruppe G q-ter Ordnung, und s umfasst mindestens die verschlüsselten Nutzdaten $m$,
wobei die Entschlüsselung folgendermaßen erfolgt:

m= $D_K$ (S) und wobei K folgendermaßen berechnet wird:

$$K = \left( \prod c_j^{\gamma_j^{(i)}} \right)^{\theta_i}$$

wobei alle arithmetischen Berechnungen in besagter multiplikativer Gruppe *G* *q*-ter Ordnung ausgeführt werden und *D* die Entschlüsselungsoperation eines symmetrischen Verschlüsselungsverfahrens ist und K der Schlüssel.

**13.** Verfahren nach Anspruch 11 oder 12, wobei die verschlüsselten Nutzdaten s des weiteren Zusatzinformationen enthält, die für das symmetrische Entschlüsselungsverfahren *D* benötigt werden.

**14.** Verfahren nach Anspruch 11 bis 13, wobei besagtes symmetrisches Entschlüsselungsverfahren *D* K' = H(K) verwendet, wobei H eine Hash-Funktion ist.

## Revendications

**1.** Méthode pour générer une *i*-ième clé privée dans un système d'encryption à clé publique avec des clés privées traçables formées par un composant public $\gamma^{(i)}$ et un composant secret $\theta_i$, selon un facteur de coalition *k* maximal, avec toutes les opérations arithmétiques effectuées dans un groupe multiplicatif *Z/qZ* où *q* est un nombre premier. ledit composant public étant défini par:

$$\gamma^{(i)} = (1, i \bmod q, i^2 \bmod q, \ldots, i^{2k-1} \bmod q)$$

et ledit composant secret étant défini par: :

$$\theta_i = \frac{\sum r_j \alpha_j}{\sum r_j \gamma_j^{(i)}} \bmod q$$

où $r_j$ et $\alpha_j$ sont des valeurs aléatoires dans le groupe *Z/qZ*.

**2.** Méthode selon la revendication 1, dans laquelle *q* est plus grand que $2^{127}$

**3.** Méthode selon la revendication 1 ou 2, dans laquelle la clé publique correspondante est définie par:

($y, h_1, \ldots, h_{2k}$) où $h_j = g^{r_j}$ pour $1 \leq j \leq 2k$ et *g* est un générateur d'un groupe multiplicatif *G* d'ordre *q*,

et $y = \prod_{j=1}^{2k} h_j^{\alpha_j}$ .

**4.** Méthode selon la revendication 1 ou 2, dans laquelle la clé publique correspondante est définie par:

$$(y, h_1, \ldots, h_{2k})$$

où $h_j = r_j g$ pour $1 \leq j \leq 2k$ et *g* est un générateur d'un groupe additif *G* d'ordre *q*,

**14**

$$\text{et } y = \sum_{j=1}^{2k} \alpha_j h_j \ .$$

**5.** Méthode selon l'une des revendications 1 à 4, dans laquelle $i$ est sélectionné à partir de 1 à $\ell$, $\ell$ étant le nombre de clés privées différents générées correspondant à une clé publique donnée.

**6.** Méthode selon l'une des revendications 1 à 4, dans laquelle $i$ est sélectionné à partir de 1 à $\ell$, $\ell$ étant le nombre de clés privées différents générées correspondant à une clé publique donnée, cette méthode comprend de plus :

- générer une valeur pseudo-aléatoire $\zeta_i$ dans l'intervalle 1 à $q$-1, $q$ étant au moins plus grand que $\ell$, le composant public étant défini par :

$$\gamma^{(i)} = (1, \zeta_i, \zeta_i^2, \ldots, \zeta_i^{2k-1}).$$

- associer la valeur pseudo-aléatoire $\zeta_i$ aux données secrètes générées.

**7.** Méthode selon la revendication 6, dans laquelle la valeur pseudo-aléatoire $\zeta_i$ est calculée à partir de $i$ de sorte que pour chaque $i$, seulement un unique $\zeta_i$ soit obtenu.

**8.** Méthode selon la revendication 6, dans laquelle la valeur pseudo-aléatoire $\zeta_i$ est calculée à partir de $i$ et d'une chaîne additionnelle de bit, ce calcul étant effectué de sorte que pour chaque $i$, seulement un unique $\zeta_i$ soit obtenu.

**9.** Méthode pour décrypter un texte chiffré c avec la clé privée générée selon les revendications 1 à 8 pour obtenir un message $m$, le texte chiffré étant formaté comme suit :

c = (s, c$_1$, ..., c$_{2k}$); s, c$_1$, ..., c$_{2k}$ sont des membres d'un groupe multiplicatif $G$ d'ordre q, la décryption étant comme suit:

$$m = \frac{s}{\left( \prod c_j^{\gamma_j^{(i)}} \right)^{\theta_i}}$$

où les calculs arithmétiques sont effectués dans ledit groupe multiplicatif $G$ d'ordre $q$.

**10.** Méthode pour décrypter un texte chiffré $c$ avec la clé privée générée selon les revendications 1 à 8 pour obtenir un message $m$, le texte chiffré étant formaté comme suit :

c = (s, c$_1$, ..., c$_{2k}$); s, c$_1$, ..., c$_{2k}$ sont des membres d'un groupe additif $G$ d'ordre $q$, la décryption étant comme suit:

$$m = s - \left( \sum c_j \gamma_j^{(i)} \right) \theta_i$$

où les calculs arithmétiques sont effectués dans ledit groupe additif $G$ d'ordre $q$.

**11.** Méthode pour décrypter un texte chiffré c avec la clé privée générée selon les revendications 1 à 8 pour obtenir un message $m$, le texte chiffré étant formaté comme suit :

$c$ = (s, c$_1$, ..., c$_{2k}$); s, c$_1$, ..., c$_{2k}$ sont des membres d'un groupe additif $G$ d'ordre $q$, et s une chaîne de bit arbitraire. la décryption étant comme suit:

m= $D_K$ (s) et où $K$ est calculé comme suit:

$$K = \left( \sum c_j \gamma_j^{(i)} \right) \theta_i$$ où les calculs arithmétiques sont effectués dans ledit groupe additif $G$ d'ordre q et D est l'opération de décryption d'un système d'encryption symétrique et $K$ est la clé.

12. Méthode pour décrypter un texte chiffré c avec la clé privée générée selon les revendications 1 à 8 pour obtenir une charge utile $m$, le texte chiffré étant formaté comme suit :

c = (s, $c_1$, ..., $c_{2k}$); s, $c_1$, ..., $c_{2k}$ sont des membres d'un groupe multiplicatif $G$ d'ordre $q$, et s comprenant au moins la charge utile $m$,
la décryption étant comme suit :

$m$= $D_K$ (s) et où $K$ est calculé comme suit:

$$K = \left( \prod c_j^{\gamma_j^{(i)}} \right)^{\theta_i}$$ où les calculs arithmétiques sont effectués dans ledit groupe multiplicatif $G$ d'ordre

q et D est l'opération de décryption d'un système d'encryption symétrique et $K$ est la clé.

13. Méthode selon la revendication 11 ou 12 dans laquelle la charge utile s encryptée contient de plus des informations additionnelles requises par le système de décryption symétrique $D$.

14. Méthode selon l'une des revendications 11 à 13 dans laquelle ledit système de décryption symétrique $D$ utilise K' = H(K) où H est une fonction de hachage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7039803 B

- US 7010125 B

**Non-patent literature cited in the description**

- Linear code implies public-key traitor tracing. *Public Key Cryptography -- PKC 2002, 4th International Workshop on Practice and theory in Public Key Cryptography,* 14 February 2002
- Broadcast encryption. **A. FIAT ; M. NAOR.** CRYPTO'93, Lecture Notes in Computer Science. Springer-Verlag, 1994, vol. 773, 480-491
- Tracing Traitors. **B. CHOR ; A. FIAT ; M. NAOR.** CRYPTO'94, Lecture Notes in Computer Science. Springer-Verlag, 1994, vol. 839, 257-270

- Pirate evolution: how to make the most of your traitor keys. **A. KIAYIAS ; S. PEHLIVANOGLU.** CRYPTO'07, Lecture Notes in Computer Sciences. Springer-Verlag, 2007, vol. 4622, 448-465
- An efficient public-key traitor tracing scheme. **D. BONEH ; M. FRANKLIN.** CRYPTO'99, Lecture Notes in Computer Sciences. Springer-Verlag, 1999, vol. 1666, 338-353